# EUROPEAN PATENT APPLICATION

(11) **EP 1 253 747 A1**
(43) Date of publication of application: **30.10.2002**
(21) Application number: 01116875.4
(22) Date of filing: 11.07.2001
(51) Int. Cl.: H04L 12/24

(54) **Network management system**

(71) Applicant: Agilent Technologies, Inc. (a Delaware corporation), Palo Alto, CA 94303 (US)
(72) Inventor: Schroth, Albrecht, 71083 Herrenberg (DE); Schweyer, Tanja, 70563 Stuttgart (DE)
(74) Representative: Barth, Daniel Mathias

(57) **Abstract**

A Network management system (NMS) for managing a communication network (CN) is described. An image of the communication network (CN) is stored in a database (DB). One or more alarms are sent to the network management system (NMS) if one or more failures occur within the communication network (CN). The received alarms are evaluated on the basis of the stored image of the communication network (CN) and the failure/s within the communication network (CN) are automatically located.

## Description

### Background of the Invention

The invention relates to a method of managing a communication network and to a network management system for a communication network.

It is known to manage the transmission equipment, i.e. the network elements of a communication network with a network management system. It is also known that - in case of a failure in the communication network detected by one of the network elements - an alarm is sent from the network elements in the communication network to the network management system. An operator then has to evaluate the alarm and fix the failure. However, if e.g. a patch panel connecting a number of fibres breaks down, a large number of alarms arrives at the network management system so that it is very difficult for the operator to accurately locate the root cause of the failure.

### Object and Advantages of the Invention

It is therefore an object of the invention to provide an improved method for managing a communication network which allows to locate failures within the communication network more efficiently.

This object is solved by a method of managing a communication network according to claim 1. The object is also solved by a network management system according to claim 13.

According to the invention, structural information of the communication network is stored in a database. Based on this information, an evaluation of the received signals, in particular the received alarms, is carried out. Then, it is evaluated whether there is any kind of correlation between the received signals. With this correlation it is possible to automatically locate events, in particular failure/s within the communication network.

The invention has the advantage that the location of the event or failure, i.e. the root cause, may be evaluated automatically so that the operator does not have to perform this difficult task anymore. Instead, the operator can concentrate on how to repair the failure and can thereby minimize the duration until the failure is overcome.

In an embodiment of the invention, it is checked whether the received alarms relate to a common cable and/or to a common patch panel of cables or fibres or conduits and/or to common other equipment of the communication network. Based on such correlation it is possible to locate the root cause of the failure very efficiently, in particular very fast and accurate.

Further embodiments of the invention are provided in the other dependant claims.

### Detailed Description of an Embodiment of the Invention

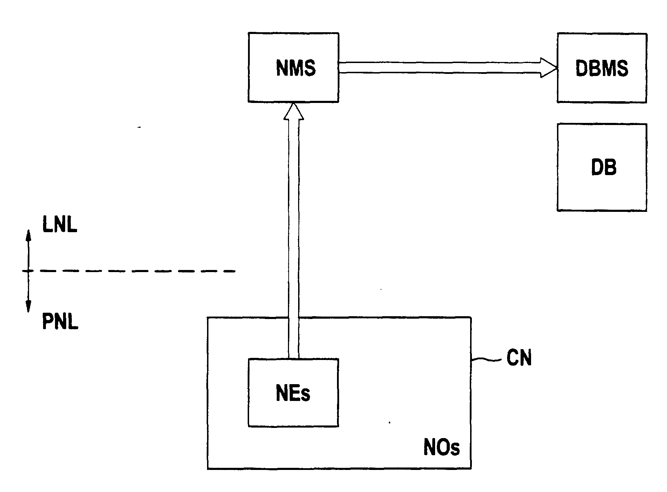

The only figure shows an embodiment of a system for managing a communication network according to the invention.

In a communication network CN of e.g. a company, a large number of network objects NOs need to be managed. These network objects NOs are the buildings, floors and rooms for which the communication network CN to be managed is intended. Further network objects NOs are all active and passive transmission devices which are necessary to build up the communication network CN, e.g. cables, multiplexers, crossconnects, telephones, facsimiles and so on. The active transmission devices, e.g. multiplexers, patch panels, are also called network elements NEs. All network objects NOs of the communication network CN relate to the so-called physical network layer PNL.

A network management system NMS is provided for managing the network elements NEs of the communication network CN and the connections between the network elements NEs on a logical level. This means that the network managemen system NMS knows the ports of the network elements NEs, how they are connected to each other and how the traffic runs through the connections. However, the network management system NMS does not know the nature of the connections, i.e. which fiber in which cable builds up the connection.

All network objects NOs of the communication network CN including all network elements NEs are stored in a database DB which is managed by a database management system DBMS. The database DB does also comprise all physical connections, e.g. cables between the network elements NEs and any further information concerning the network objects NOs and their integration within the communication network CN.

The network management system NMS relates to the so-called logical network layer LNL whereas the database DB holds a complete copy or image of the communication network CN from the physical network layer PNL to the logical network layer LNL.

For managing the communication network CN, the network management system NMS has to access the database DB via the database management system DBMS. For that purpose, an interface is provided by the database management system DBMS.

If a failure occurs in connection with one of the network elements NEs of the communicaton network CN, e.g. if a patch panel of the communication network CN breaks down, corresponding alarms from all affected network elements NEs are sent from the communication network CN to the network management system NMS. If the patch panel connects a large number of fibers, then an alarm is sent to the network management systems NMS for every network element port which is directly connected to the fiber. If the traffic running through the fiber is destributed over a number of wavelengths and branches out through several physical channels within the communication network CN, then the number of alarms increases with the number of affected ports. This leads to a large number of logical alarms which arrive at the network management system NMS.

According to the invention, all logical alarms are forwarded from the network management system NMS to the database management system DBMS which is able to evaluate the alarms with the goal of automatically locating the physical failure within the communication network CN.

For that purpose, the database management system DBMS uses the image of the complete communication network CN stored in the database DB.

In particular, the database management system DBMS checks whether the received logical alarms relate to a common cable and/or to a common patch panel of cables and/or to common other equipment of the physical level of the communication network CN. More generally, the database management system DBMS tries to find out whether there is any kind of physical correlation between the received alarms.

In addition to this evaluation, the database management system DBMS may perform checks whether the alarms have anything to do with any changes of the communication network CN which were carried out shortly before the alarms were received. Insofar, the database management system CN tries to find out any kind of correlation with prior changes of the communication network CN. For that purpose, the data base management system DBMS stores the history of the communication network CN.

All these evaluations and checks are carried out by the database management system DBMS with the help of the database DB, in particular with the image of the communication network CN stored in the database DB.

For finding out the above mentioned correlations, any kind of correlation method or correlation function may be used. As well, it is possible to perform such correlations in two or more levels, i.e. to evaluate a second correlation with respect to the results of a first correlation.

If the database management system DBMS is able to find out one or more possible failures, e.g. if it finds out the patch panel to which all received alarms relate, then this/these failure/s, i.e. the root cause/s are provided to the operator.

The possible root cause/s or failure/s may be provided visually to the operator. If there is not only one but a number of failures, then the failures may be represented as a list. The sequence of the failures of the list may depend on calculated probabilities of the failures.

Furthermore, it is possible not only to provide the root cuase/s or failure/s as such but to provide additional information concerning the failure/s. In particular, such additional information may comprise one or more alternatives how to circumvent a respective failure, e.g. alternative cables and/or patch panels which may be used until the broken patch panel is fixed. It is then possible that the database management system DBMS automatically switches from the broken cables and patch panels to the alternative cables and patch panels.

In an even more automated solution, the database management system DBMS may initiate tests of the network objects NOs in order to increase the quality of the results provided to the operator. For example, the database management system DBMS may initiate self tests of one of the network elements NEs or may initiate tests of other network objects NOs which are performed by one of the network elements NEs, e.g. by sending a measurement signal through a fiber. In particular, if it is not possible to accurately identify one failure out of a number of possible failures, the tests may help to increase the probabilities of the failures and thereby clarify which one is the most probable root cause.

## Claims

1. A method of managing a communication network (CN), wherein a network management system (NMS) is provided, wherein an structural information of the communication network (CN) is stored in a database (DB), and wherein one or more signals are sent to the network management system (NMS) if one or more events occur within the communication network (CN), comprising the steps of evaluating the received signals on the basis of the stored information and evaluating whether there is any kind of correlation between the received signals.

2. Method of claim 1, wherein the structural information of the communication network (CN) is an image or a copy of the communication network (CN).

3. Method of claim 1, wherein the correlation is used for automatically locating event/s within the communication network (CN).

4. Method of claim 1, wherein the signals are alarms, and wherein the events are failures within the communication network (CN).

5. Method of claim 3 further comprising the steps of checking whether the received alarms relate to a common cable and/or to a common patch panel of cables and/or to common other equipment of the communication network (CN).

6. Method of claim 3 further comprising the step of checking whether the alarms have anything to do with any changes of the communication network (CN) which were carried out shortly before the alarms were received.

7. Method of claim 3 further comprising the step of providing the failure/s visually to an operator.

8. Method of claim 7 further comprising the steps of providing the failures in a list wherein the sequence of the failures depends on calculated probabilities of the failures.

9. Method of claim 3 further comprising the steps of providing additional information concerning the failure/s.

10. Method of claim 9 further comprising the step of providing one or more alternatives how to circumvent the failure.

11. Method of claim 10 further comprising the step of automatically switching the communication network (CN) to said alternative/s.

12. Method of claim 1 further comprising the step of automatically initiating tests in order to increase the quality of the performed evaluation/s.

13. Network management system (NMS) for managing a communication network (CN), wherein an image of the communication network (CN) is stored in a database (DB), wherein one or more alarms are sent to the network management system (NMS) if one or more failures occur within the communication network (CN), wherein the received alarms are evaluated on the basis of the stored image of the communication network (CN), and wherein the failure/s within the communication network (CN) are automatically located.

1. A method of managing a communication network (CN), wherein a network management system (NMS) is provided, wherein an structural information of the communication network (CN) is stored in a database (DB), and wherein one or more signals are sent to the network management system (NMS) if one or more events occur within the communication network (CN), comprising the steps of evaluating the received signals on the basis of the stored information and evaluating whether there is any kind of correlation between the received signals.

2. Method of claim 1, wherein the structural information of the communication network (CN) is an image or a copy of the communication network (CN).

3. Method of claim 1, wherein the correlation is used for automatically locating event/s within the communication network (CN).

4. Method of claim 1, wherein the signals are alarms, and wherein the events are failures within the communication network (CN).

5. Method of claim 3 further comprising the steps of checking whether the received alarms relate to a common cable and/or to a common patch panel of cables and/or to common other equipment of the communication network (CN).

6. Method of claim 3 further comprising the step of checking whether the alarms have anything to do with any changes of the communication network (CN) which were carried out shortly before the alarms were received.

7. Method of claim 3 further comprising the step of providing the failure/s visually to an operator.

8. Method of claim 7 further comprising the steps of providing the failures in a list wherein the sequence of the failures depends on calculated probabilities of the failures.

9. Method of claim 3 further comprising the steps of providing additional information concerning the failure/s.

10. Method of claim 9 further comprising the step of providing one or more alternatives how to circumvent the failure.

11. Method of claim 10 further comprising the step of automatically switching the communication network (CN) to said alternative/s.

12. Method of claim 1 further comprising the step of automatically initiating tests in order to increase the quality of the performed evaluation/s.

13. Network management system (NMS) for managing a communication network (CN), wherein an image of the communication network (CN) is stored in a database (DB), wherein one or more alarms are sent to the network management system (NMS) if one or more failures occur within the communication network (CN), wherein the received alarms are evaluated on the basis of the stored image of the communication network (CN), and wherein the failure/s within the communication network (CN) are automatically located.

14. The method or the Network management system according to any one of the above claims, wherein the structural information comprises information about network objects and/or elements of the communication network, and physical connections between the network objects and/or elements.
